# EUROPEAN PATENT APPLICATION

(11) **EP 4 733 871 A1**
(43) Date of publication of application: **29.04.2026**
(21) Application number: 23960066.1
(22) Date of filing: 29.12.2023
(51) Int. Cl.: G05B 23/02

(54) **METHOD AND APPARATUS FOR RECORDING VEHICLE BUS FAULT, AND DEVICE AND STORAGE MEDIUM**

(30) Priority: 29.11.2023 CN 202311639077
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: LIU, Kun, Hangzhou, Zhejiang 310051 (CN); SUN, Ye, Hangzhou, Zhejiang 310051 (CN); LI, Mengyao, Hangzhou, Zhejiang 310051 (CN); HAN, Yong, Hangzhou, Zhejiang 310051 (CN)
(74) Representative: Boult Wade Tennant LLP
(86) International application number: PCT/CN2023/143477
(87) International publication number: WO 2025/112165

(57) **Abstract**

The present application provides a vehicle bus fault recording method and apparatus, a device, and a storage medium. The method includes: sending wake-up record messages to a primary domain control node of an ECU according to a preset cycle after the ECU is woken up; receiving, by the primary domain control node, the wake-up record messages sent by at least one ECU controlled by the primary domain control node when it is detected that vehicle sleep fault detection conditions are met; and storing the wake-up record messages of the at least one ECU in a memory of the vehicle. When abnormal battery drain occurs in the vehicle, troubleshooting personnel can search for specific wake-up reasons of the vehicle by the wake-up record messages, thereby improving the efficiency of solving the vehicle battery drain problem.

## Description

The present application claims priority to Chinese Patent Application No. 2023116390779, filed with the China National Intellectual Property Administration on November 29, 2023, entitled "VEHICLE BUS FAULT RECORDING METHOD AND APPARATUS, DEVICE, AND STORAGE MEDIUM", which is hereby incorporated by reference in its entirety.

### TECHNICAL FIELD

The present application relates to the field of vehicle technologies and, particularly to a vehicle bus fault recording method and apparatus, device, and storage medium.

### BACKGROUND

In recent years, the issue of energy conservation in vehicles has garnered significant attention, and reducing unnecessary power consumption is a highly effective method. To reduce power consumption and avoid excessive battery power consumption that could lead vehicle battery drain and failure to start-up, the way of a partial network management (Partial NetWork, PN) is often adopted to achieve orderly sleep and wake-up of electronic control units (Electronic Control Unit, ECU) of the whole vehicle through virtual function clusters (Virtual Function Cluster, VFC) and partial network clusters (Partial Network Cluster, PNC) to sleep when no communication is required and wake-up when communication is required, so that the battery power of the vehicle is effectively conserved.

However, as vehicle electronic and electrical systems become increasingly complex, more electronic control units are powered by the battery, inevitably leading to a vehicle battery drain problem.

In related technologies, once the vehicle experiences a battery drain problem, the troubleshooting approach involves significant consumption of personnel resources, vehicle resources, and equipment resources. By the way of replicating the problem, electronic control units are inspected one by one, leading to low efficiency in solving the vehicle battery drain problem.

### SUMMARY

The present application provides a vehicle bus fault recording method and apparatus, a device, and a storage medium, which can improve the efficiency of solving the vehicle battery drain problem.

In a first aspect, the present application provides a vehicle bus fault recording method, applied to any primary domain control node in a vehicle, and including:
receiving, by the primary domain control node, wake-up record messages sent by at least one electronic control unit ECU controlled by the primary domain control node when it is detected that vehicle sleep fault detection conditions are met; where the wake-up record messages sent by each ECU includes a field indicating an identifier of the ECU and a field indicating wake-up reasons of the ECU;
storing the wake-up record messages of the at least one ECU in a memory of the vehicle.

In one possible implementation, the method further includes:
uploading the wake-up record messages of the at least one ECU stored in the memory but not yet uploaded to a cloud server according to a preset data upload cycle.

In one possible implementation, the wake-up record messages further include a field indicating a current network state and a field indicating a partial network cluster PNC.

In one possible embodiment, the field indicating the wake-up reasons of the ECU in the wake-up record messages is used to indicate a virtual function cluster VFC that triggered the wake-up of the ECU.

In one possible implementation, the method further includes:
if, after a first preset duration following vehicle switch power-off and the vehicle being armed, the primary domain control node remains in a wake-up state and the vehicle is not in a charging state, it is determined that the vehicle sleep fault detection conditions are met.

In one possible implementation, the method further includes:
if a first signal indicating that the vehicle is being charged, sent by a powertrain domain node, is received, determining that the vehicle is in a charging state;
otherwise, determining that the vehicle is not in a charging state.

In a second aspect, the present application provides a vehicle bus fault recording method, applied to any electronic control unit ECU in a vehicle, and including:
sending wake-up record messages to a primary domain control node of the ECU according to a preset cycle after the ECU is woken up, where the wake-up record messages include a field indicating an identifier of the ECU and a field indicating wake-up reasons of the ECU.

In one possible implementation, the wake-up record messages further include a field indicating a current network state and a field indicating a partial network cluster PNC.

In one possible implementation, the field indicating wake-up reasons of the ECU in the wake-up record messages is used to indicate a virtual function cluster VFC that triggered the wake-up of the ECU.

In a third aspect, the present application provides a vehicle bus fault recording apparatus, including:
a receiving module, configured to receive, by a primary domain control node, wake-up record messages sent by at least one electronic control unit ECU controlled by the primary domain control node, when it is detected that vehicle sleep fault detection conditions are met; where the wake-up record messages sent by each ECU include a field indicating an identifier of the ECU and a field indicating wake-up reasons of the ECU;
a storage module, configured to store the wake-up record messages of the at least one ECU in a memory of the vehicle.

In one possible implementation, the apparatus further includes:
an upload module, configured to upload the wake-up record messages of the at least one ECU stored in the memory but not yet uploaded to a cloud server according to a preset data upload cycle.

In one possible embodiment, the wake-up record messages further include a field indicating a current network state and a field indicating a partial network cluster PNC.

In one possible implementation, the field indicating the wake-up reasons of the ECU in the wake-up record messages is used to indicate a virtual function cluster VFC that triggers the wake-up of the ECU.

In one possible implementation, the apparatus further includes:
a first determination module, configured to, determine that the vehicle sleep fault detection conditions are met, if, after a vehicle switch is powered off and the vehicle is armed for a first preset duration, the primary domain control node remains in a wake-up state and the vehicle is not in a charging state.

In one possible implementation, the apparatus further includes a second determination module, configured to:
determine that the vehicle is in a charging state, if a first signal indicating that the vehicle is being charged, sent by a powertrain domain node, is received;
otherwise, determine that the vehicle is not in a charging state.

In a fourth aspect, the present application provides a vehicle bus fault recording apparatus, including:
a processing module, configured to send wake-up record messages to primary domain control node of an ECU according to a preset cycle after the ECU is woken up, where the wake-up record messages include a field indicating an identifier of the ECU and a field indicating wake-up reasons of the ECU.

In one possible implementation, the wake-up record messages further include a field indicating a current network state and a field indicating a partial network cluster PNC.

In one possible implementation, the field indicating wake-up reasons of the ECU in the wake-up record messages is used to indicate Virtual Function Cluster (VFC) that triggered the wake-up of the ECU.

In a fifth aspect, the present application provides an electronic device, including a processor, a memory, and a communication interface;
the memory stores computer-executable instructions;
the processor executes the computer-executable instructions stored in the memory, causing the processor to execute the method according to any one of the first aspect or the second aspect.

In a sixth aspect, the present application provides a computer-readable storage medium, storing computer-executable instructions, where when executed by a processor, the computer-executable instructions are configured to implement the method according to any one of the first aspect or the second aspect.

In a seventh aspect, an embodiment of the present invention provides a chip, including a memory and a processor, where the memory stores codes and data, the memory is coupled to the processor, and the processor executing programs in the memory causes the chip to be configured to execute the method according to any one of the first aspect or the second aspect.

In an eighth aspect, an embodiment of the present invention provides a program product, including a computer program, where when the program product is executed on a computer, the computer is caused to execute the method according to any one of the first aspect or the second aspect.

In a ninth aspect, an embodiment of the present invention provides a computer program, when the computer program is executed by a processor, the processor is configured to execute the method according to any one of the first aspect or the second aspect.

In the vehicle bus fault recording method, apparatus, device, and storage medium provided in the present application, the wake-up record messages may be sent to the primary domain control node of the ECU according to the preset cycle after the ECU is woken up. When it is detected that the vehicle sleep fault detection conditions are met, the primary domain control node receives the wake-up record messages sent by at least one ECU controlled by the primary domain control node and stores the wake-up record messages in the memory of the vehicle. In the above process, the memory of the vehicle may store the wake-up record messages sent by the ECU. By searching for the ECU wake-up reasons in the wake-up record messages, the reason of vehicle battery drain problem may be accurately pinpointed, thereby improving the efficiency of solving the vehicle battery drain problem.

### BRIEF DESCRIPTION OF DRAWINGS

In order to more clearly illustrate technical solutions in embodiments of the present application or in the prior art, the drawings needed to be used in the description of the embodiments or the prior art will be briefly introduced in the following. Obviously, the drawings in the following description are some embodiments of the present application. For those of ordinary skill in the art, other drawings may also be obtained from these drawings without creative efforts. The drawings herein are incorporated into and constitute part of this specification, and together with the description, explain the principles of the present application.
FIG. 1 is a schematic diagram illustrating an application scenario provided in an embodiment of the present application.
FIG. 2 is a flowchart of a vehicle bus faults recording method provided in an embodiment of the present application.
FIG. 3 is a schematic diagram illustrating the division of partial network cluster provided in an embodiment of the present application.
FIG. 4 is a flowchart of another vehicle bus faults recording method provided in an embodiment of the present application.
FIG. 5 is a flowchart of a process of recording wake-up record messages by a primary domain control node provided in an embodiment of the present application;
FIG. 6 is a schematic structural diagram of a vehicle bus faults recording apparatus provided in an embodiment of the present application.
FIG. 7 is a schematic structural diagram of another vehicle bus faults recording apparatus provided in an embodiment of the present application.
FIG. 8 is a schematic structural diagram of an electronic device provided in an embodiment of the present application.

Through the above drawings, clear embodiments of the present application have been illustrated and will be described in greater detail later. These drawings and textual descriptions are not intended to limit the scope of the concepts underlying the present application in any way, but rather to explain the concepts of the present application to those skilled in the art by reference to specific implementations.

### DESCRIPTION OF EMBODIMENTS

To make the objectives, technical solutions, and advantages of the present application clearer, the technical solutions of the present application will be described clearly and completely below in conjunction with specific implementations and corresponding drawings. It is obvious that the described embodiments are only part of the embodiments of the present application, not all of them. Based on the embodiments of the present application, all other embodiments obtained by those of ordinary skill in the art without creative efforts shall fall within the scope of protection of the present application.

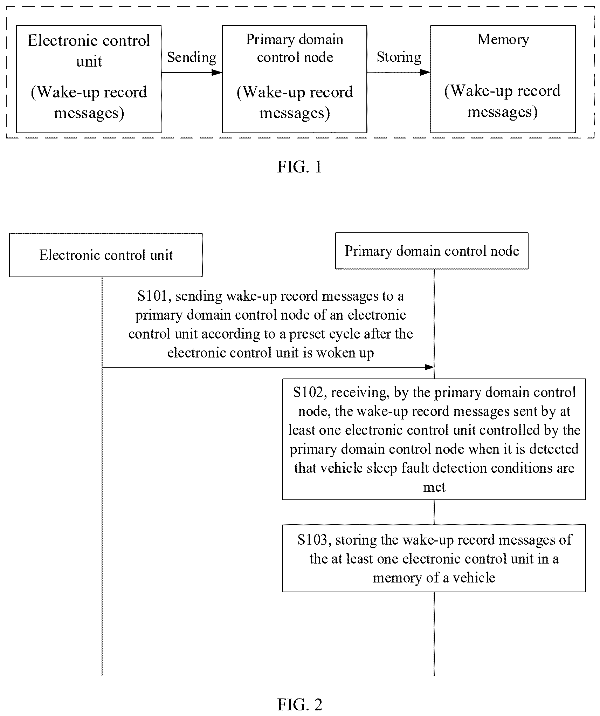

FIG. 1 is a schematic diagram illustrating an application scenario provided in an embodiment of the present application. Referring to FIG. 1, a vehicle may be equipped with an electronic control unit (Electronic Control Unit, ECU), a primary domain control node, and a memory.

The ECU may send wake-up record messages to the primary domain control node. The primary domain control node may record the wake-up record messages and store the wake-up record messages in the memory, the cause of the vehicle battery drain problem may be accurately pinpointed through the wake-up record messages.

During the vehicle development and design process, to reduce power consumption and avoid excessive battery power consumption that could lead the vehicle unable to start-up, a partial network management (Partial NetWork, PN) is introduced. Network communication channels are established only when functional scenarios require and external information interaction is needed. The concept of communication on the network exists only when PN is activated. This is a method of grouping and controlling network communications, aiming to find a controller to minimize wake-up path to achieve whole vehicle sleep and wake-up when meeting functional requirements. PN may be implemented through virtual function clusters (Virtual Function Cluster, VFC) and partial network clusters (Partial Network Cluster, PNC). Where VFC involves grouping communication for interactive signal (Signal) that enable one or more vehicle functions. VFC development progresses concurrently with subsystem design, and each VFC defines specific functions. Signals requiring interaction under these functions must be mapped within the corresponding VFC. By establishing unified requirements for whole vehicle functionality effectiveness through power modes, user intentions are translated into whole vehicle recognizable commands and guiding functional execution when the functions are available; it defines a standby mode, resting, limited functionality, with only some low-energy functions in an activatable state, requiring user activation for functionality effectiveness and allowing post-run functions. PNC focuses on the network signal level, identifying groupings of signals across multiple vehicle ECUs to support whole vehicle functionality. Each group is called a PNC, representing a grouping of signals. Its essence is to achieve the wake-up and sleep of necessary nodes based on functional requirements, thereby reducing power consumption. As vehicle electronic and electrical systems become increasingly complex, the number of ECUs constantly supplied with power from the battery also increases, inevitably leading to vehicle battery drain problem.

In related technologies, when a vehicle experiences the battery drain problem, most cases are intermittent problems. The troubleshooting approach involves significant consumption of personnel resources, vehicle resources, and equipment resources, where ECUs are inspected one by one by replicating the problem, which results in low efficiency in solving the vehicle battery drain problem.

In the embodiments of the present application, after an ECU is woken up, wake-up record messages may be sent to the primary domain control node of the ECU according to a preset cycle. When it is detected that the vehicle sleep fault detection conditions are met, the primary domain control node receives wake-up record messages sent by at least one ECU controlled by the primary domain control node and stores the wake-up record messages of the at least one ECU in the memory of the vehicle. By searching for wake-up reasons of ECUs in the wake-up record messages, the reason of vehicle battery drain problem may be accurately pinpointed, thereby improving the efficiency of solving vehicle battery drain problem.

Next, the technical solutions described in the present application will be explained in detail through specific implementations. It should be noted that the following embodiments may exist independently or be combined with each other. For identical or similar content, repetitive explanations will not be provided across different embodiments.

FIG. 2 is a flowchart of a vehicle bus fault recording method provided in an embodiment of the present application. Referring to FIG. 2, the method may include:
S101: sending wake-up record messages to a primary domain control node of an ECU according to a preset cycle after the ECU is woken up.

Abnormal sleep and abnormal wake-up in the vehicle are caused by a wake-up state of the ECU in the vehicle. After the ECU is woken up, it may send abnormal wake-up messages may be sent to the primary domain control node at specific time intervals. The wake-up record messages sent by each ECU includes a field indicating an identifier of the ECU and a field indicating wake-up reasons of the ECU.

In a specific implementation, multiple primary domain control nodes may be configured in the vehicle to record different bus faults. For example, the configured primary domain control nodes may include a cockpit domain control node, an intelligent driving domain control node, a powertrain domain control node, and a body domain control node.

Optionally, different ECUs may be categorized into the cockpit domain, intelligent driving domain, powertrain domain, body domain, and chassis domain of the vehicle. For example, the ECU in the body domain may include an electronic control unit 1 (ECU1), an electronic control unit 2 (ECU2), an electronic control unit 3 (ECU3), and an electronic control unit 4 (ECU4). Where the ECU1 may be an air conditioning control module, the ECU2 may be an interior lighting control module, the ECU3 may be a battery management module, and the ECU4 may be a seat control module.

Optionally, the sources of the wake-up source may be categorized into active wake-up and passive wake up. The active wake-up (Active Wake up): as a master wake-up node, the ECU wakes itself up when it detects an input signal from an active wake-up source, and attempts to wake up other ECUs by sending an NM Frame (NM Frame), which represents an internal request from the module to the network. The passive wake-up (Passive Wake up): as a slave wake-up node, the ECU cannot wake itself up actively and can only be woken up by receiving network management messages sent by other ECUs.

In a specific implementation, each wake-up record message may include 8 bytes (Byte), with each byte corresponding to 8 bits (Bit). Where Byte 0 corresponds to a source node identifier (Source Node identifier). Each ECU is assigned a unique identifier to inform the receiving node which node has sent this NM PDU (NM Protocol Data Unit, Network Management Protocol Data Unit). Where the format of the NM PDU may be as shown in Table 1.

**Table 1**

| | Bit7 | Bit6 | Bit5 | Bit4 | Bit3 | Bit2 | Bit1 | Bit0 |
|---|---|---|---|---|---|---|---|---|
| Byte7 | Wake up Reasons | | | | | | | |
| Byte6 | Wake up Reasons | | | | | | | |
| Byte5 | PNC Bit | | | | | | | |
| Byte4 | PNC Bit | | | | | | | |
| Byte3 | PNC Bit | | | | | | | |
| Byte2 | PNC Bit | | | | | | | |
| Byte1 | Control Bit Vectore | | | | | | | |
| Byte0 | Source Node identifier | | | | | | | |

In a specific implementation, the wake-up record messages further include a field indicating a current network state and a field indicating the PNC. For example, in the wake-up record messages, the field indicating the current network state is Byte1, which corresponds to a control bit vector (Control Bit Vector, CBV) and may contain 8 bits. Where Bit0 corresponds to a repeat message request, if this bit is 0, it indicates that a state in which no repeat message state is requested, and if this bit is 1, it indicates that a state in which a repeat message state is requested; Bit4 corresponds to an active wake-up bit, if this bit is 0, it indicates that the node has not woken up the network, i.e., the passive wake-up, if this bit is 1, it indicates that the node has woken up the network, i.e., the active wake-up; Bit3 corresponds to a network management sleep coordination bit; Bit6 corresponds to a partial network information bit; and the remaining Bit1, Bit2, Bit5, and Bit7 may be reserved and defined according to user requirements.

Optionally, boundaries of PNC may be clearly defined based on network segments and power consumption by PNC, dividing vehicle domain controllers into different PNCs for wake-up, Byte 2 to Byte 5 in the wake-up record messages may correspond to different PNC bits. Where in versions 4.0.3 and 4.2.2 of an automotive open system architecture (Automotive Open System Architecture, Autosar), the corresponding positions of PNC bits in Byte2 to Byte5 may be as shown in Table 2.

**Table 2**

| Autosar Version | PNC Bit | | | | | | | | | | | | | | | |
|---|---|---|---|---|---|---|---|---|---|---|---|---|---|---|---|---|
| Byte | 2 | | | | | | | | 3 | | | | | | | |
| Bit | 7 | 6 | 5 | 4 | 3 | 2 | 1 | 0 | 7 | 6 | 5 | 4 | 3 | 2 | 1 | 0 |
| 4.0.3 | 7 | 6 | 5 | 4 | 3 | 2 | 1 | 0 | 15 | 14 | 13 | 12 | 11 | 10 | 9 | 8 |
| 4.2.2 | 23 | 22 | 21 | 20 | 19 | 18 | 17 | 16 | 31 | 30 | 29 | 28 | 27 | 26 | 25 | 2 |

| Byte | 4 | | | | | | | | 5 | | | | | | | |
|---|---|---|---|---|---|---|---|---|---|---|---|---|---|---|---|---|
| Bit | 7 | 6 | 5 | 4 | 3 | 2 | 1 | 0 | 7 | 6 | 5 | 4 | 3 | 2 | 1 | 0 |
| 4.0.3 | 23 | 22 | 21 | 20 | 19 | 18 | 17 | 16 | 31 | 30 | 29 | 28 | 27 | 26 | 25 | 2 |
| 4.2.2 | 39 | 38 | 37 | 36 | 35 | 34 | 33 | 32 | 47 | 46 | 45 | 44 | 43 | 42 | 41 | 4 |

Optionally, in the version 4.2.2 of AUTOSAR, valid PNC bits in Byte2 are PNC16 to PNC23, if the value corresponding to PNC16 is 1, it indicates that PNC16 is enabled; conversely, if it is 0, PNC16 is disabled.

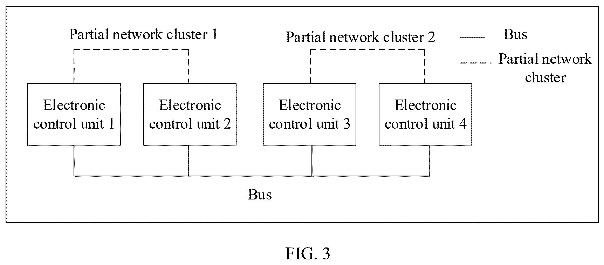

To further illustrate the relationship between ECU, PNC, and VFC, the ECU, PNC, and VFC corresponding to the bus are described in detail in conjunction with FIG. 3.

FIG. 3 is a schematic diagram illustrating a division of partial network clusters provided in an embodiment of the present application. Referring to FIG. 3, an electronic control unit 1, an electronic control unit 2, an electronic control unit 3, and an electronic control unit 4 are interconnected via a bus. The bus may be one of the following: a CAN bus, a CAN FD bus, or a FR daisy-chain bus. From a functional implementation perspective, the electronic control unit 1 and the electronic control unit 2 may be grouped together, while the electronic control unit 3 and the electronic control unit 4 may be grouped together, that is, the actual physical bus to be divided into two independent network subgroups: a partial network cluster 1 (PNC1) and a partial network cluster 2 (PNC2), enabling synchronized sleep and wake-up among group members. In contrast, a virtual function cluster is used to facilitate port-level communication among the software components required to implement one or more vehicle functions, the virtual function cluster network is formed by connecting ports of the software components required to realize the vehicle function.

In a specific implementation, as ECU wake-up reasons bits, Byte6 to Byte7 record the wake-up reasons of each ECU. Each wake-up reason occupies one coding (bit), with a maximum of 256 in total. When the ECU actively wakes up upon meeting the corresponding VFC activation conditions, the relevant wake-up reason bit may be set. Where ID and Coding of the wake-up reason are shown in Table 3.

**Table 3**

| Coding | Wake-up reason ID |
|---|---|
| 0x0000 | Wake-up reason_667949 |
| 0x0001 | Wake-up reason _667950 |
| 0x0002 | Wake-up reason_169654 |
| ...... | ...... |
| 0xFFFF | Reserved |

In a specific implementation, the field indicating the wake-up reasons of the ECU in the wake-up record messages is used to indicate the VFC that triggers the wake-up of the ECU. For example, the ECU1 and the ECU2 constitute a PNC1, this PNC1 may correspond to a seat comfort function, identified by a virtual function cluster 1 (VFC1). The seat comfort function may be assigned a wake-up reason ID, with the numbered result being: Wake-up reason_667949, corresponding to the bit value 0x0000 in the wake-up reason field.

For example, after being woken up, the ECU1 operates, and sends the wake-up record messages to the body domain control node at a time interval of 500ms.

S 102, receiving, by the primary domain control node, the wake-up record messages sent by at least one ECU controlled by the primary domain control node when it is detected that the vehicle sleep fault detection conditions are met.

The primary domain control node is woken up by the wake-up record messages sent by the ECU during a sleep cycle. By identifying the active wake-up bit corresponding to Bit4 in the wake-up record messages and active wake-up bit of primary domain control node, it may determine which ECU actively wakes up the network. When it is detected that the vehicle currently meets the sleep fault, the primary domain control node may receive the wake-up record messages sent by the at least one ECU connected to and controlled by the bus.

Optionally, the vehicle sleep fault detection condition may be: after the body domain control node is woken up by the wake-up record messages during a sleep state, the powertrain domain node does not send a signal indicating that the vehicle is being charged.

For example, the body domain control node is woken up by the ECU1 during the sleep cycle and detects that the powertrain domain node does not sent the signal indicating that the vehicle is being charged, it may receive the wake-up record messages sent by the ECU1, which is connected to and controlled by the CAN bus.

S103, storing the wake-up record messages of the at least one ECU in a memory of the vehicle.

When the primary domain control node receives the wake-up record messages from the ECU, it may store the wake-up record messages in the added electrically erasable programmable read only memory (Electrically Erasable Programmable read only memory, EEPROM).

Optionally, the EEPROM may store data related to abnormal sleep and abnormal wake-up of the vehicle. Where the EEPROM space required for storing data causing the abnormal sleep of the vehicle may be 5.36 Kbit (kilobits), and the EEPROM space required for storing data causing the abnormal wake-up of the vehicle may be 2.16 Kbit.

For example, when the body domain control node receives the wake-up record messages from the ECU1, it may store the wake-up record messages into the added EEPROM.

In the embodiments of the present application, after the ECU is woken up, the wake-up record messages may be sent to the primary domain control node of the ECU according to a preset cycle. When it is detected that the vehicle sleep fault detection conditions are met, the primary domain control node receives the wake-up record messages sent by the at least one ECU controlled by the primary domain control node and stores the wake-up record messages of the at least one ECU in the memory of the vehicle. By searching for the wake-up reasons of the ECU in the wake-up record messages, the reason of the vehicle battery drain problem may be accurately pinpointed, thereby improving the efficiency of solving the vehicle battery drain problem.

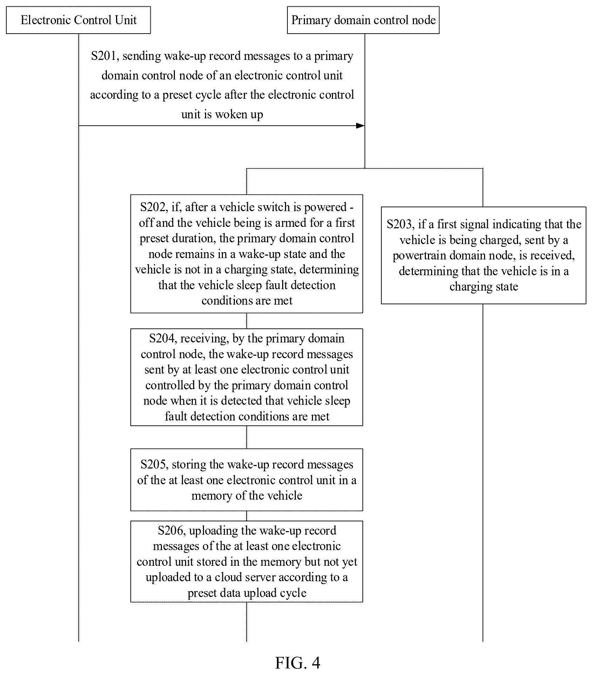

Next, based on the embodiment shown in FIG. 2 and in conjunction with FIG. 4, a detailed description will be provided regarding the vehicle bus fault recording method mentioned above.

FIG. 4 is a flowchart of another vehicle bus fault recording method provided in an embodiment of the present application. Referring to FIG. 4, the method may include:
S201, sending wake-up record messages to a primary domain control node of an ECU according to a preset cycle after the ECU is woken up.

It should be noted that the specific implementation process of step S201 may refer to that of step S101, and will not be elaborated on further here.

S202, if, after a vehicle switch is powered off and the vehicle is armed for a first preset duration, the primary domain control node remains in a wake-up state and the vehicle is not in a charging state, determining that vehicle sleep fault detection conditions are met.

When the primary domain control node determines that it is necessary to record the wake-up messages, it first needs to determine that the vehicle has met the sleep fault conditions. In specific implementation, the primary domain control node needs to be in a wake-up state, the vehicle is not in a charging state, the startup conditions of the timer needs to be satisfied, and the first preset duration after the vehicle is armed needs to be reached.

In a specific implementation, the vehicle meeting the sleep fault conditions includes the following two cases.

Case 1: the primary domain control node initiates a sleep fault detection timer after the vehicle is in a power-off state, that is, when an engine ignition (Igition, IGN) switch is turned off (IGN15 OFF), and receives a remote arming signal (AlrmSts=0x1) of the whole vehicle; and the wake-up time of the primary domain control node is longer than the first preset duration after the vehicle is armed.

Case 2: the primary domain control node is woken up by the wake-up record messages from sleep, determines that the vehicle is in a power-off state, that is, the engine ignition switch is turned off (IGN15 OFF), and initiates an abnormal wake-up timer after receiving the remote arming signal (AlrmSts=0x1) of the whole vehicle; and the wake-up time of the primary domain control node is equal to the first preset duration.

It should be noted that, for Case 1 and Case 2, the sleep fault detection timer or the wake-up fault detection timer may be canceled when any one of the following conditions are met.
Condition 1: the body domain control node sends a signal indicating that the whole vehicle is not armed (AlrmSts≠0x1);
Condition 2: the vehicle is in a state where the engine ignition switch is turned on (IGN15 ON).

S203, if a first signal indicating that the vehicle is being charged, sent by the powertrain domain node, is received, determining that the vehicle is in a charging state.

Since the primary domain control node needs to determine whether the vehicle is in a charging state when acquiring the wake-up record messages, it excludes the wake-up of the primary domain control node caused by the vehicle being in a charging state. In specific implementation, if the primary domain control node receives the first signal indicating that the vehicle is being charged, sent by the powertrain domain node, it can be determined that the vehicle is in a charging state; otherwise, it is determined that the vehicle is not in a charging state.

For example, if the vehicle is in a power-off state and sends a remote arming signal of the entire vehicle, the first signal indicating charging sent by the powertrain domain node is: ChrgnSts=0x1, which represents that the vehicle is currently in the charging state. If the body domain control node receives the first signal: ChrgnSts=0x1, indicating that the vehicle is charging, it may be determined that the vehicle is in the charging state; conversely, if the body domain control node does not receive the first signal: ChrgnSts=0x1, indicating that the vehicle is charging, it represents that the vehicle is not in the charging state.

S204, receiving, by the primary domain control node, the wake-up record messages sent by the at least one ECU controlled by the primary domain control node when it is detected that the vehicle sleep fault detection conditions are met,.

When the primary domain control node detects that the current vehicle meets the sleep fault conditions, it may receive the wake-up record messages sent by the at least one ECU connected to the bus.

For Case 1: when the vehicle meets the sleep fault conditions, that is, when the primary domain control node is continuously woken up for a duration longer than the first preset time, the primary domain control node records the wake-up record messages from the ECUs that currently maintain the wake-up of the network in a preset time period. The time signal is the last frame received time signal, with the time value recorded in the format of year, month, day, hour, minute, and second. The time signal sent by a body domain controller shall be used as the reference. If no time signal is received, the last frame sent by the body domain controller shall be adopted.

It should be noted that when the engine ignition switch of the vehicle is turned on, or the whole vehicle is not in an armed state, or the sleep fault detection timer times out, the current wake-up cycle ends.

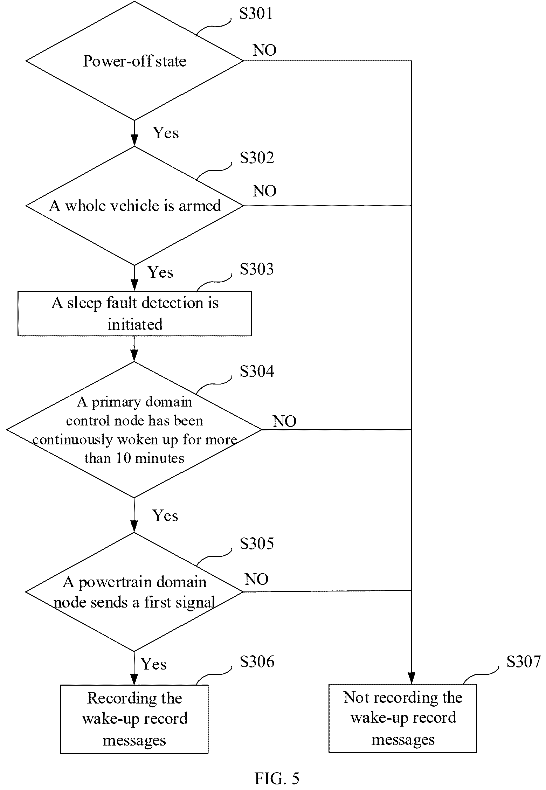

To better illustrate the process in which the primary domain control node records the wake-up record messages, the conditions need to be met for the primary domain control node to record the wake-up record messages are explained in conjunction with FIG. 5.

FIG. 5 is a flowchart of a process of recording wake-up record messages by a primary domain control node provided in an embodiment of the present application. Referring to FIG. 5, the process includes the following steps.

S301, whether a vehicle in a power-off state, i.e., (IGN15 = OFF).

If yes, proceed to S302; if no, proceed to S307.

S302, whether the vehicle is in a whole vehicle armed state, i.e., (AlrmSts = 0x1).

If yes, proceed to S303; if no, proceed to S307.

S303, the sleep fault detection is initiated.

S304, whether the primary domain control node has been continuously woken up for more than 10 minutes.

If yes, proceed to S304; if no, proceed to S307.

S305, whether the powertrain domain node sent a first signal (i.e., ChrgnSts=0x1).

If yes, proceed to S306; if no, proceed to S307.

S306, recording the wake-up record messages.

S307, not recording the wake-up record messages.

For example, the vehicle meets the sleep fault, the body domain control node has been continuously woken up for more than 10 minutes, in 2 seconds, the body domain control node records the wake-up record messages sent by the ECU 1, which is currently maintaining the network wake-up. The recorded time value corresponds to the time signal of the last frame received from the body domain controller may be 10:10:10 on May 18, 2020.

For Case 2: when the primary domain control node is woken up from sleep by the wake-up record messages and is woken up within the preset first duration, the primary domain control node determines which ECU actively wakes up the network by identifying the active wake-up bit corresponding to Bit4 in the wake-up record messages of all ECUs, increments the abnormal wake-up count of the primary domain control node by 1, and records the wake-up record messages from the corresponding nodes when the time exceeds a preset second duration. Meanwhile, the number of times the primary domain control node is woken up in a sleep cycle may be accumulated. By setting a maximum limit, if the number of times the primary domain control node is woken up in a sleep cycle reaches the preset maximum limit, the primary domain control node may record the wake-up record messages sent by all ECUs that have woken up the primary domain control node during the sleep cycle.

Specifically, when the primary domain control node identifies all ECUs to determine which ECU actively wakes up the network, this process also includes identifying the active wake-up bit of the primary domain control node itself.

Optionally, the second preset duration is used to measure the time an ECU remains in a wake-up state after being woken up. Whenever the second preset duration is reached, the primary domain control node may record the wake-up record messages of the ECU. For example, the preset second duration may be 30 min.

Optionally, the maximum limit refers to an upper limit for the number of times the primary domain control node is woken up within a sleep cycle. Whenever the number of the primary domain control node is woken up in a sleep cycle reaches the preset maximum limit, the wake-up record messages sent by all ECUs that have woken up the primary domain control node during the sleep cycle may be recorded. For example, the maximum limit may be set to 15 times.

It should be noted that when the engine ignition switch of the vehicle is turned on, or the whole vehicle is not in an armed state, or the number of times the primary domain control node is woken up reaches the upper limit, the sleep cycle ends.

For example, the body domain control node is woken up from sleep by the wake-up record messages and is woken up in 1 second. The body domain control node determines that it is the ECU1 that actively wakes up the network by identifying Bit4 in the wake-up record messages of all ECUs, increments the abnormal wake-up count of the body domain control node by 1, and may record the wake-up record messages corresponding to the ECU1 when the time exceeds 30 min. Meanwhile, the number of times the body domain control node is woken up in a sleep cycle may be accumulated. When the the number of times reaches the maximum limit of 15 times, the body domain control node may record the wake-up record messages sent by all ECUs, including the ECU1, the ECU2, and the ECU3, that have woken up the body domain control node during a sleep cycle.

S205, storing the wake-up record messages of the at least one ECU in a memory of the vehicle.

After the vehicle meets the sleep fault conditions and the primary domain control node records the wake-up record messages of at least one ECU, it may parse these wake-up record messages to acquire the information contained in Byte0, Byte6, and Byte7 of the messages, the information is combined and stored in the EEPROM of the vehicle.

Optionally, a diagnostic module may be added to the memory to store the parsed wake-up record messages. The diagnostic module may be divided into two areas. In Area 1, five groups (Group) are set up to store abnormal wake-up fault codes: Group1, Group2, ..., and Group5, each group stores abnormal wake-up fault codes with a length of 54 bytes; in Area 2, five groups are set up to store abnormal sleep fault codes: Group1, Group2, ..., and Group5, each group stores abnormal sleep fault codes with a length of 134 bytes, Group1 stores the most recently generated fault information, Group5 stores the oldest generated faults. Each time new fault information is generated, it is placed in Group1, and the original data in Group1 is placed in Group2, and so on, with the last group of fault information being pushed out of the queue.

For example, the 54 bytes in Group1 of Area 1 in the diagnostic module may be used to monitor corresponding positions of various network segments of the ECU, storing the information in Byte0, Byte6, and Byte7 of the parsed wake-up record messages. Where part of the bytes and the monitored ECU positions may be as shown in Table 4.

**Table 4**

| Byte | Monitored ECU | Byte of wake-up record messages |
|---|---|---|
| Byte15 | Power control module (Power Control Module PCM) | Byte0 |
| Byte16 | | Byte6 |
| Byte17 | | Byte7 |
| Byte18 | Battery energy control module (Battery Energy Control Module, BECM) | Byte0 |
| Byte19 | | Byte6 |
| Byte20 | | Byte7 |

S206, uploading the wake-up record messages of the at least one ECU stored in the memory but not yet uploaded to a cloud server according to a preset data upload cycle.

When the parsed wake-up record messages of the ECU are stored in the memory, and the storage space of the memory reaches an upper limit, the wake-up record messages of the at least one ECU stored in the memory but not yet uploaded are uploaded to the cloud server through a telematics box (Telematics Box, TBOX). When the whole vehicle is in an abnormal state, troubleshooting personnel may obtain abnormal data of the whole vehicle from the cloud. After obtaining the abnormal data, the specific wake-up reasons may be found by the bus data and by the predefined network management messages in conjunction with the wake-up reasons coding codes.

Optionally, the preset data upload cycle may be the number of recorded parsed wake-up record messages set in the memory. For example, whenever the memory records five parsed wake-up record messages, the upload-to-cloud operation may be performed.

In a specific implementation, the reason triggering the wake-up of the primary domain control node may be identified by looking up the ID corresponding to the wake-up reasons in the predefined network management messages, and each VFC activation condition corresponds to a wake-up reason (ID). The predefined network management messages are shown in Table 5.

**Table 5**

| ECU | Reason for maintaining wake-up | Wake-up reason (ID) | Subsystem | Code |
|---|---|---|---|---|
| Passenger-side control unit | Seat Comfort Functions (Seat Comfort Functions) | 667949 | Seat control | 54518 |
| | Infotainment push (Infotainment push) | 667950 | | |
| | Settings profile (Settings profile) | 169654 | | |

For example, when the memory has recorded parsed five wake-up record messages of the ECU, when the storage capacity of memory reaches the limit, the five parsed but not yet uploaded wake-up record messages stored in the memory may be uploaded to the cloud server through the TBOX. When the whole vehicle occurs an abnormal state, troubleshooting personnel can obtain the abnormal data of the whole vehicle from the cloud. Where the acquired Coding code could be 0x0000, which represents the wake-up reason is 667949. By searching for the predefined network management messages to look up the ECU wake-up reason (ID) and the reason for maintaining the wake-up, it can be determined that wake-up reason_667949 corresponds to a wake-up triggered by the seat comfort functions, thus, it can quickly pinpoint that the reason of the whole vehicle failing to enter sleep is due to an abnormality in the seat comfort functions associated with the body domain control node.

In the embodiments of the present application, after the ECU is woken up, the wake-up record messages may be sent to the primary domain control node of the ECU according to the preset cycle. If, after the vehicle switch is powered off and the vehicle is armed for the first preset duration, the primary domain control node remains in a wake-up state and the vehicle is not in a charging state, it is determined that the vehicle sleep fault detection conditions are met. If the first signal indicating that the vehicle is being charged, sent by the powertrain domain node, is received, it is determined that the vehicle is in a charging state. When it is detected that the vehicle sleep fault detection conditions are met, the primary domain control node receives the wake-up record messages sent by the at least one ECU controlled by the primary domain control node, stores the wake-up record messages of the at least one ECU in the memory of the vehicle, and uploads the wake-up record messages of the at least one ECU stored in the memory but not yet uploaded to the cloud server according to the preset data upload cycle. During the above process, when the vehicle experiences the battery drain problem, troubleshooting personnel can acquire the abnormal data of the whole vehicle from the cloud. After acquiring the abnormal data, the specific wake-up reason can be found by the bus data and by the Coding codes of the wake-up reasons, thereby improving the efficiency of solving the vehicle battery drain problem.

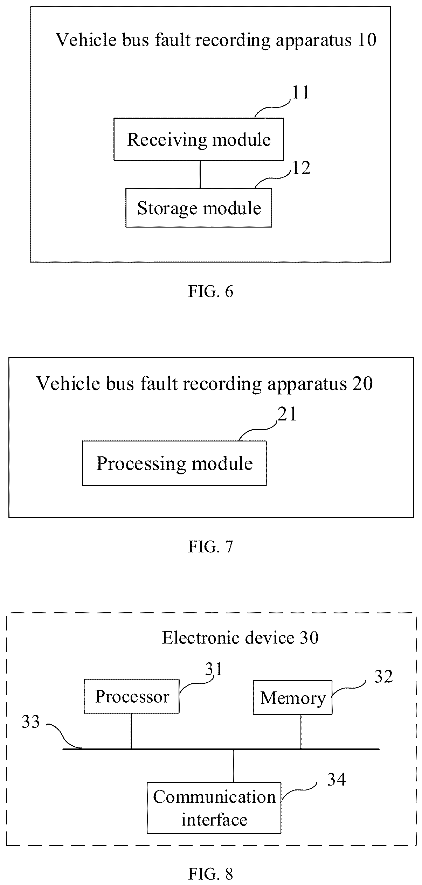

FIG. 6 is a schematic structural diagram of a vehicle bus fault recording apparatus provided in an embodiment of the present application. Referring to FIG. 6, a vehicle bus fault recording apparatus 10 includes:
a receiving module 11, used to receive, by a primary domain control node, wake-up record messages sent by at least one ECU controlled by the primary domain control node when it is detected that vehicle sleep fault detection conditions are met; where the wake-up record messages sent by each ECU include a field indicating an identifier of the ECU and a field indicating wake-up reasons for the ECU; and
a storage module 12, used to store the wake-up record messages of the at least one ECU in a memory of a vehicle.

The vehicle bus fault recording apparatus provided in the embodiments of the present application can execute the technical solutions illustrated in the aforementioned method embodiments. Their implementation principles and beneficial effects are similar, and thus will not be elaborated on further here.

In one possible implementation, the vehicle bus fault recording apparatus 10 further includes:
an upload module 13, used to upload the wake-up record messages of the at least one ECU stored in the memory but not yet uploaded to a cloud server according to a preset data upload cycle.

In one possible implementation, the wake-up record messages further include a field indicating a current network state and a field indicating a partial network cluster (PNC).

In one possible implementation, the field indicating the wake-up reasons of the ECU in the wake-up record messages is used to indicate the virtual function cluster (VFC) that triggers the wake-up of the ECU.

In one possible implementation, the vehicle bus fault recording apparatus 10 further includes:
a first determination module 14, used to determine that the vehicle sleep fault detection conditions are met, if, after a vehicle switch is powered off and the vehicle is armed for a first preset duration, the primary domain control node remains in a wake-up state and the vehicle is not in a charging state.

In one possible implementation, the vehicle bus fault recording apparatus 10 further includes a second determination module 15, which is used to:
determine that the vehicle is in a charging state, if the first signal indicating that the vehicle is being charged, sent by the powertrain domain node, is received;
otherwise, determine that the vehicle is not in a charging state.

The vehicle bus fault recording apparatus provided in the embodiments of the present application may execute the technical solutions illustrated in the aforementioned method embodiments. Their implementation principles and beneficial effects are similar, and thus will not be elaborated on further here.

FIG. 7 is a schematic structural diagram of another vehicle bus faults recording apparatus provided in an embodiment of the present application. Referring to FIG. 7, the vehicle bus fault recording apparatus 20 includes:
a processing module 21, used to, send wake-up record messages to a primary domain control node of an ECU according to a preset cycle after the ECU is woken up, where the wake-up record messages include a field indicating an identifier of the ECU and a field indicating wake-up reasons of the ECU.

In one possible implementation, the wake-up record messages further include a field indicating a current network state and a field indicating a partial network cluster (PNC).

In one possible implementation, the field indicating the wake-up reasons of the ECU in the wake-up record messages is used to indicate virtual function cluster VFC that triggers the wake-up of the ECU.

The vehicle bus fault recording apparatus provided in the embodiments of the present application may execute the technical solutions illustrated in the aforementioned method embodiments. Its implementation principles and beneficial effects are similar, and thus will not be elaborated on further here.

FIG. 8 is a schematic structural diagram of an electronic device provided in an embodiment of the present application. Referring to FIG. 8, the electronic device 30 may include a processor 31, a memory 32, and a communication interface 34. Exemplarily, the processor 31, memory 32, and communication interface 34 are interconnected through a bus 33.

The memory 32 stores computer-executable instructions.

The processor 31 executes the computer-executable instructions stored in the memory 32, enabling the processor 31 to perform the methods provided in the aforementioned method embodiments

In specific applications, the electronic device shown in FIG. 8 may be implemented as any primary domain control node or any ECU in the vehicle as described in the aforementioned method embodiments, and it is not limited in the present solution.

The embodiments of the present application provide a computer-readable storage medium storing computer-executable instructions which, when executed by a processor, are used to implement the method described in any one of the aforementioned method embodiments.

The embodiments of the present application provide a chip including a memory and a processor. The memory stores code and data, and is coupled to the processor. The processor runs a program in the memory, enabling the chip to execute the method described in any one of the aforementioned method embodiments.

The embodiments of the present application provide a program product including a computer program which, when executed on a computer, enables the computer to execute the method described in any one of the aforementioned method embodiments.

The embodiments of the present application provide a computer program, which, when executed by a processor, is used to execute the method described in any one of the aforementioned method embodiments.

Those skilled in the art should understand that the embodiments of the present invention may be provided as a method, system, or computer program product. Accordingly, the present invention may take the form of an entirely hardware embodiment, an entirely software embodiment, or an embodiment combining both software and hardware aspects. Furthermore, the present invention may take the form of a computer program product embodied on one or more computer-usable storage medium (including but not limited to a magnetic disk memory, a CD-ROM, an optical memory, etc.) that contain computer-usable program codes.

The present invention is described with reference to a flowchart and/or a block diagram of a method, an apparatus (a system), and a computer program product according to embodiments of the invention. It should be understood that each process and/or block in the flowchart and/or block diagram, as well as a combination of processes and/or blocks in the flowchart and/or block diagram, may be implemented by computer program instructions. These computer program instructions may be provided to a processor of a general-purpose computer, a special-purpose computer, an embedded processor, or other programmable data processing device to produce a machine, such that the instructions executed by the processor of the computer or other programmable data processing device create an apparatus for implementing the functions specified in one or more processes of the flowchart and/or one or more blocks of the block diagram.

These computer program instructions may also be stored in a computer-readable memory that may direct a computer or other programmable data processing devices to operate in a specific manner, such that the instructions stored in the computer-readable memory produce an article of manufacture including an instruction apparatus. This instruction apparatus implements the functions specified in one or more processes of the flowchart and/or one or more blocks of the block diagram.

These computer program instructions may also be loaded onto a computer or other programmable data processing devices, causing a series of operational steps to be performed on the computer or other programmable devices to produce a computer-implemented process. The instructions executed on the computer or other programmable devices thus provide steps for implementing the functions specified in one or more processes of the flowchart and/or one or more blocks of the block diagram.

In a typical configuration, a computing device includes one or more processors (CPU), input/output interfaces, network interfaces, and memory.

The memory may include forms of volatile memory, random access memory (RAM), and/or non-transitory memory, such as a read-only memory (ROM) or a flash memory (flash RAM). The memory is an example of the computer-readable medium.

Computer-readable medium encompasses both permanent and non-permanent, removable and non-removable media and can implement information storage by any method or technology. The information may include computer-readable instructions, data structures, program modules, or other data. Examples of computer storage medium include, but are not limited to, a phase-change memory (PRAM), a static random-access memory (SRAM), a dynamic random-access memory (DRAM), other types of RAM, a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, magnetic disk storage or other magnetic storage devices, or any other non-transitory medium that can be used to store information accessible by a computing device. As defined herein, the computer-readable medium does not include transitory computer-readable medium (a transitory media), such as modulated data signals and carrier waves.

It should also be noted that the terms "comprising," "including," or any other variants thereof are intended to cover non-exclusive inclusion, such that a process, method, product, or device that includes a series of elements not only includes those elements, but also includes other elements not explicitly listed, or further includes elements inherent to such process, method, product, or device. Without further limitation, an element defined by the phrase "including a..." does not preclude the presence of additional identical elements in the process, method, product, or device that includes the element.

The above descriptions are merely embodiments of the present application and are not intended to limit the present application. For those skilled in the art, various modifications and changes may be made to the present application. Any modifications, equivalent replacements, improvements, etc., made within the spirit and principles of the present application shall be included within the scope of the claims of the present application.

## Claims

1. A vehicle bus fault recording method, **characterized by** being applied to any primary domain control node in a vehicle, and comprising:
receiving, by the primary domain control node, wake-up record messages sent by at least one electronic control unit ECU controlled by the primary domain control node when it is detected that vehicle sleep fault detection conditions are met; wherein the wake-up record messages sent by each ECU comprises a field indicating an identifier of the ECU and a field indicating wake-up reasons of the ECU;
storing the wake-up record messages of the at least one ECU in a memory of the vehicle.

2. The method according to claim 1, further comprising:
uploading the wake-up record messages of the at least one ECU stored in the memory but not yet uploaded to a cloud server according to a preset data upload cycle.

3. The method according to claim 1 or 2, wherein the wake-up record messages further comprise a field indicating a current network state and a field indicating partial network cluster PNC.

4. The method according to any one of claims 1 to 3, wherein the field indicating the wake-up reasons of the ECU in the wake-up record messages is used to indicate virtual function cluster VFC that triggered the wake-up of the ECU.

5. The method according to any one of claims 1 to 4, further comprising:
if, after a vehicle switch is powered off and the vehicle is armed for a first preset duration, the primary domain control node remains in a wake-up state and the vehicle is not in a charging state, determining that the vehicle sleep fault detection conditions are met.

6. The method according to any one of claims 1 to 5, further comprising:
if a first signal indicating that the vehicle is being charged, sent by a powertrain domain node, is received, determining that the vehicle is in a charging state;
otherwise, determining that the vehicle is not in a charging state.

7. A vehicle bus fault recording method, **characterized by** being applied to any electronic control unit ECU in a vehicle, and comprising:
sending wake-up record messages to a primary domain control node of the ECU according to a preset cycle after the ECU is woken up, wherein the wake-up record messages comprise a field indicating an identifier of the ECU and a field indicating wake-up reasons of the ECU.

8. The method according to claim 7, wherein the wake-up record messages further comprise a field indicating a current network state and a field indicating partial network cluster PNC.

9. The method according to claim 7 or 8, wherein the field indicating the wake-up reasons of the ECU in the wake-up record messages is used to indicate a virtual function cluster VFC that triggers the wake-up of the ECU.

10. A vehicle bus fault recording apparatus, **characterized by**, comprising:
a receiving module, configured to receive, by a primary domain control node, wake-up record messages sent by at least one electronic control unit ECU controlled by the primary domain control node when it is detected that vehicle sleep fault detection conditions are met; wherein the wake-up record messages sent by each ECU comprise a field indicating an identifier of the ECU and a field indicating wake-up reasons of the ECU;
a storage module, configured to store the wake-up record messages of the at least one ECU in a memory of the vehicle.

11. A vehicle bus fault recording apparatus, **characterized by**, comprising:
a processing module, configured to send wake-up record messages to a primary domain control node of an ECU according to a preset cycle after the ECU is woken up, wherein the wake-up record messages comprise a field indicating an identifier of the ECU and a field indicating wake-up reasons of the ECU.

12. An electronic device, **characterized by**, comprising a processor, a memory, and a communication interface;
wherein the memory stores computer-executable instructions;
the processor executes the computer-executable instructions stored in the memory, causing the processor to execute the method according to any one of claims 1 to 9.

13. A computer-readable storage medium, **characterized by**, storing computer-executable instructions, wherein when executed by a processor, the computer-executable instructions are configured to implement the method according to any one of claims 1 to 9.

14. A chip, **characterized by**, comprising a memory and a processor, the memory stores codes and data, the memory is coupled to the processor, and the processor executing programs in the memory causes the chip to be configured to execute the method according to any one of claims 1 to 9.

15. A program product, **characterized by**, comprising a computer program, wherein when the program product is executed on a computer, the computer is caused to execute the method according to any one of claims 1 to 9.

16. A computer program, **characterized in that** when the computer program is executed by a processor, the processor is configured to execute the method according to any one of claims 1 to 9.
